# EUROPÄISCHE PATENTANMELDUNG

(11) **EP 1 452 504 A2**
(43) Veröffentlichungstag der Anmeldung: **01.09.2004**
(21) Anmeldenummer: 04450024.7
(22) Anmeldetag: 05.02.2004
(51) Int. Cl.: C04B 28/30, C04B 18/24, C04B 18/26, C04B 38/00, B28B 3/20, E04B 2/14, E04C 1/40, E04C 2/36

(54) **Werkstoff für Bauelemente, Bauelemente aus diesem Werkstoff und Verfahren zum Herstellen solcher Bauelemente**

(30) Priorität: 05.02.2003 AT 1772003; 23.04.2003 AT 2802003 U; 10.09.2003 AT 6182003 U
(71) Anmelder: Maké, Charlotte, 9800 Spittal/Drau (AT); Maké, Martin, 9800 Spittal/Drau (AT); Maké, Walter, 9800 Spittal/Drau (AT)
(72) Erfinder: Maké Martin, 9800 Spittal/Drau (AT); Maké, Walter, 9800 Spittal/Drau (AT); Siegel, Rudolf, 9650 Feldkirchen (AT); Kreibich, Helmut, Dipl.-Ing., 9520 Annenheim (AT)
(74) Vertreter: Beer, Manfred, Dipl.-Ing.

(57) **Zusammenfassung**

Ein Werkstoff für das Herstellen von Bauelementen wie Baublöcken oder Wandelementen enthält als Grundstoff wenigstens ein zellulosehaltiges Material insbesondere Hackschnitzel oder Hanfschäben und als anorganisches Bindemittel ein Gemenge aus gebrannter Magnesia (Kauster) und Magnesiumsulfat. Beim Herstellen von Bauelementen aus diesem Werkstoff wird ein Verfahren angewendet, bei dem die Bestandteile des Werkstoffes gemischt und mit Wasser angemacht zu einer Strangpressform befördert werden, wobei der Werkstoff beim formgebenden Arbeitsschritt mit Hilfe von Mikrowellen erhitzt wird, um den Abbindevorgang zu beschleunigen. Aus dem Strang aus gehärtetem Werkstoff können durch Sägen und/oder Fräsen Bauelemente hergestellt werden.

## Beschreibung

Die Erfindung betrifft einen Werkstoff für Bauelemente mit den Merkmalen des einleitenden Teils von Anspruch 1.

Die Erfindung betrifft weiters Bauelemente, die aus dem erfindungsgemäßen Werkstoff hergestellt sind.

Schließlich betrifft die Erfindung ein Verfahren und eine Anlage zum Herstellen von Bauelementen aus dem erfindungsgemäßen Werkstoff.

Werkstoffe zum Herstellen von Bauelementen sind in den verschiedensten Ausführungsformen bekannt. Bekannt sind auch Holz-Bindemittel-Verbundwerkstoffe, beispielsweise aus Hackschnitzeln und Zement, zum Herstellen von Mantelbausteinen. Weiters bekannt sind Werkstoffe aus Holzfasern und organischen Bindemitteln zum Herstellen von Holzwolle-Leichtbauplatten. Bekannt sind überdies Werkstoffe aus Sägespänen und Zement zum Herstellen von anorganisch gebundenen Pressspanplatten.

Bekannt ist auch ein modulares Bausteinsystem aus expandiertem Polystyrol (EPS). Diese Bausteine sind beispielsweise in Form von Mantelbausteinen ausgeführt, die entsprechend einem vorgegebenen Bauplan zusammengesteckt werden. Anschließend wird der Hohlraum in den Mantelbausteinen mit Beton ausgegossen, insbesondere nachdem eine Armierung eingebracht worden ist.

Zum Errichten von Wänden in Mantelbetonbauweise werden Wände aus Holzwolle-Zement-Bauplatten mit Abstandhaltern (Baubügeln) zu Wänden aufgerichtet und der Raum zwischen den Bauplatten nach dem Einbringen einer Armierung mit Beton ausgegossen.

Für Fertigteilhäuser werden Wandmodule aus verschiedenen Werkstoffen verwendet. Diese Wandmodule sind beispielsweise aus Beton, in Holzriegel-, Ziegel- oder Leichtbeton-Bauweise hergestellt.

Derzeit ist weder ein Werkstoff, noch ein Bauelement bekannt, das es erlaubt, insbesondere beim Selbstbauen, in einfacher Weise Wände herzustellen und so ein Bauwerk zu errichten.

Ein Problem ist es, dass beim Herstellen von Zellulosefasern für die Papierherstellung erhebliche Mengen an Reststoff (Este) anfallen, deren Verwertung in der papiererzeugenden Industrie ein erhebliches Problem darstellt, da in erster Linie eine teure thermische Verwertung der Este möglich ist.

Auch beim Gewinnen von Fasern aus Hanf fallen sogenannte Hanfschäben an (Teile aus den Stängeln des Hanfs, die bei der Verarbeitung von Hanf zu Fasermaterial übrigbleiben), deren Verwertung ebenfalls problematisch ist.

Baustoffe, die mit dem Bindemittel Zement hergestellt werden, haben im allgemeinen den Nachteil, dass sie ein zu hohes spezifisches Gewicht aufweisen und mit anderen Baustoffen nur schlecht kompatibel sind.

Aus bauphysikalischer Sicht sind zementgebundene Werkstoffe zum Herstellen wandbildender Bauelemente gegenüber Werkstoffen mit Bindemitteln auf Basis von Gips oder Magnesiumverbindungen nachteilig.

Aus chemischer Sicht besteht das Problem, dass verschiedene Holzinhaltsstoffe mit Bindemitteln nicht immer kompatibel sind und daher nur bestimmte Bindemittel verwendet werden können.

Für das Herstellen von Wandbauelementen wird als Bindemittel vorwiegend Portlandzement verwendet. Derartige auf Basis von Portlandzement hergestellte Wandbauelemente haben unter anderem den Nachteil, dass sie mit organischem Werkstoff (Zellulose) nicht immer kompatibel sind.

In Sägewerken und in der Hackschnitzelerzeugung fallen große Mengen an Abfallstoffen an, die jedoch in wenig reiner Form vorliegen, wobei eine Reinigung (Fraktionierung) der Hackschnitzel nur mit erheblichem Aufwand möglich ist. Die beispielsweise in Sägewerken anfallenden Hackschnitzel sind für die Herstellung von Baustoffen bislang nicht geeignet.

Der Erfindung liegt zunächst die Aufgabe zu Grunde, einen Werkstoff für das Herstellen von Bauelementen zur Verfügung zu stellen, der einfach herzustellen ist und in dem Zellulose-Material, auch wenn es als Abfallstoff vorliegt, problemlos verwendet werden kann. Schließlich soll der erfindungsgemäße Werkstoff das Herstellen von Bauelementen mit geringem spezifischen Gewicht erlauben.

Gelöst wird diese Aufgabe mit einem Baustoff, welcher die Merkmale des Anspruches 1 aufweist.

Bevorzugte und vorteilhafte Ausgestaltungen des erfindungsgemäßen Werkstoffes sind Gegenstand der Unteransprüche, die von Anspruch 1 abhängig sind.

Der erfindungsgemäße Werkstoff enthält als Grundstoff wenigstens ein Zellulose-hältiges Material in Kombination mit wenigstens einem, vorzugsweise anorganischen, Bindemittel.

Bei dem erfindungsgemäßen Werkstoff kann der Zellulose-Grundstoff Holz, z.B. in Form von Hackschnitzeln, insbesondere ein solcher mit einer definierten Kornfraktion sein.

Als Zellulose-Grundstoff des erfindungsgemäßen Werkstoffes können auch Reste aus der Papierherstellung, wie Este, oder Reste aus der Hanffaserherstellung Hanfschäben , verwendet werden.

Auch Kombinationen der genannten Zellulose-Grundstoffe, vornehmlich ein Gemenge aus Este und/oder Hanfschäben mit Holz-Hackschnitzeln, insbesondere ein Gemenge aus Hanfschäben und Holz-Hackschnitzeln, ist in Betracht gezogen.

Ebenso bevorzugt ist ein erfindungsgemäßer Werkstoff, der als Zellulose-Grundstoff nur Hanfschäben enthält.

Der erfindungsgemäße Werkstoff enthält bevorzugt ein anorganisches Bindemittel, wobei ein Gemisch aus kaustisch gebrannter Magnesia (Kauster) und Magnesiumsulfat bevorzugt ist.

Andere anorganische Bindemittel sind ein Gemenge aus kaustisch gebrannte Magnesia und Magnesiumchlorid, weiters Lehm, Ton, Gips und verschiedene Portland- oder Alumia-Zemente.

Andere Beispiele für den Zellulose-Grundstoff, der anstelle oder in Kombination beispielsweise mit Hackschnitzeln, Este oder Hanfschäben in dem erfindungsgemäßen Werkstoff verwendet werden kann, sind Sägespäne, Hobelscharten und ähnliche Abfallstoffe der holzverarbeitenden Industrie.

Anstelle oder in Kombination mit den oben genannten Zellulose-Grundstoffen, wie Este und Hanfschäben, können auch organische Fasern verwendet werden. Beispiele für andere Zellulose-Grundstoffe sind Hanf, Flachs, Jute, Reisschäben, Zellulose, Schilf, Schafwolle, Stroh und Gräser.

Zusätzlich können auch künstliche, organische Fasern, wie Polypropylen- oder Polyethylenfasern, sowie Bikofasern verwendet werden.

Die als Zellulose-Grundstoff in einer Ausführungsform des erfindungsgemäßen Werkstoffs beispielsweise enthaltenen Holz-Anteile, insbesondere Hackschnitzel, haben eine Größe von bis zu 100 mm. Bevorzugt liegt die Größe zwischen 2 und 50 mm, wobei eine Größe zwischen 5 und 20 mm, vor allem für Hackschnitzel, ganz besonders bevorzugt ist.

In dem Werkstoff gemäß der Erfindung zum Herstellen von Bauelementen kann der Holz-Anteil, insbesondere in Form von Hackschnitzeln, in Anteilen von bis zu 40%, vorzugsweise 10 bis 20%, enthalten sein.

Der Anteil an Zellulose-hältigen Abfallstoffen, insbesondere Este oder Hanfschäben, kann bei bis zu 50% liegen, wobei ein Bereich von 15 bis 25% bevorzugt ist.

Kauster kann in der Werkstoffmischung in Anteilen zwischen 10 und 50%, vorzugsweise zwischen 15 und 30%, enthalten sein.

Magnesiumsulfat wird bevorzugt in Mengen zwischen 20 und 70%, insbesondere zwischen 30 und 50%, eingesetzt.

Alle Prozentangaben beziehen sich auf das Gesamtgewicht des Werkstoffes der Erfindung.

Das Verhältnis der für den erfindungsgemäßen Werkstoff eingesetzten Zellulose-Grundstoffe kann wie folgt angegeben sein:
Holz-Anteile zu Anteilen in Form von Este und/oder Hanfschäben: 2:1 bis 1:4, insbesondere 1:1 bis 2:1,
Das Verhältnis von organischer Zellulose-Grundstoffen zu dem Bindemittel liegt im Bereich von 4:1 bis 2:1, wobei ein Bereich von 2:1 bis 1:1,5 bevorzugt ist.

Der erfindungsgemäße Werkstoff kann eine Rohdichte zwischen 200 und 1500 kg/m³ besitzen. Insbesondere liegt die Rohdichte zwischen 500 und 1200 kg/m³, insbesondere im Bereich zwischen 600 und 900 kg/m³.

Dem erfindungsgemäßen Werkstoff können Farbstoffe zugesetzt werden, um dem Werkstoff die gewünschte Farbe zu geben. Beispielsweise sind Farbtöne im Bereich von sandig/erdigen Farbtönen bis zu Rot/Grautönen möglich. Auch ist eine Färbung des Baustoffes in Richtung eines hohen Weißgrades durch Weißsubstanzen, wie Titandioxid möglich.

Nachstehend werden Beispiele für erfindungsgemäße Werkstoffe angegeben.

| | | |
|---|---|---|
| Beispiel 1: | Zellulose (Este) | 500g |
| | Holz (Hackschnitzel) | 250g |
| | Kauster | 350g |
| | MgSO₄ | 900g |
| Beispiel 2: | Zellulose (Este) | 350g |
| | Holz (Hackschnitzel) | 200g |
| | Kauster | 350g |
| | MgSO₄ | 550g |
| Beispiel 3: | Zellulose (Este) | 250g |
| | Holz (Hackschnitzel) | 100g |
| | Kauster | 200g |
| | MgSO₄ | 500g |
| Beispiel 4: | Zellulose (Este) | 150g |
| | Holz (Hackschnitzel) | 125g |
| | Kauster | 200g |
| | MgSO₄ | 300g |
| Beispiel 5: | Hanfschäben | 214g |
| | Kauster | 183g |
| | MgSO₄ | 240g |
| Beispiel 6: | Hanfschäben | 321g |
| | Kauster | 183g |
| | MgSO₄ | 240g |
| Beispiel 7: | Hanfschäben | 428g |
| | Kauster | 183g |
| | MgSO₄ | 240g |

Wenn aus dem erfindungsgemäßen Werkstoff Bauelemente, z.B. Bausteine (Ziegel) hergestellt werden, soll die Größe der Hanfschäben nicht mehr als 30mm betragen.

Wenn aus dem erfindungsgemäßen Werkstoff Bauplatten hergestellt werden sollen, können die Hanfschäben eine Größe bis 60mm besitzen.

Unter Verwendung des vorbeschriebenen, erfindungsgemäßen Werkstoffes können Bauelemente in Form von Baublöcken, Mantelbausteinen, System-Bausteinen zum Herstellen von Außen- oder Innenwandelementen u. dgl. hergestellt werden. Beispiele hiefür sind in den angeschlossenen Zeichnungen dargestellt und werden nachstehend beschrieben.

Es zeigt:
Fig. 1 eine Draufsicht auf einen Hohl-Baustein, der aus dem erfindungsgemäßen Werkstoff hergestellt ist,
Fig. 2 eine Stirnansicht des Hohl-Bausteins aus Fig. 1,
Fig. 3 eine Schrägansicht des Hohl-Bausteins aus Fig. 1,
Fig. 4 teilweise Außenwände und eine Innenwand aus erfindungsgemäßen Bauelementen,
Fig. 5 ein Ausführungsbeispiel für ein Innenwand-Bauelement,
Fig. 6 eine erste Ausführungsform einer Anlage zum Herstellen von Bauelementen aus dem erfindungsgemäßen Werkstoff,
Fig. 7 eine zweite Ausführungsform einer Anlage zum Herstellen von Bauelementen aus dem erfindungsgemäßen Werkstoff,
Fig. 8 eine dritte Ausführungsform einer Anlage zum Herstellen von Bauelementen aus dem erfindungsgemäßen Werkstoff,
Fig. 9 in Seitenansicht ein Innenwandelement,
Fig. 10 nebeneinander gesetzte Innenwandelemente aus Fig. 9 in Richtung des Pfeiles x in Fig. 9 gesehen, und
Fig. 11 in Schrägansicht das obere Ende eines Innenwandelementes.

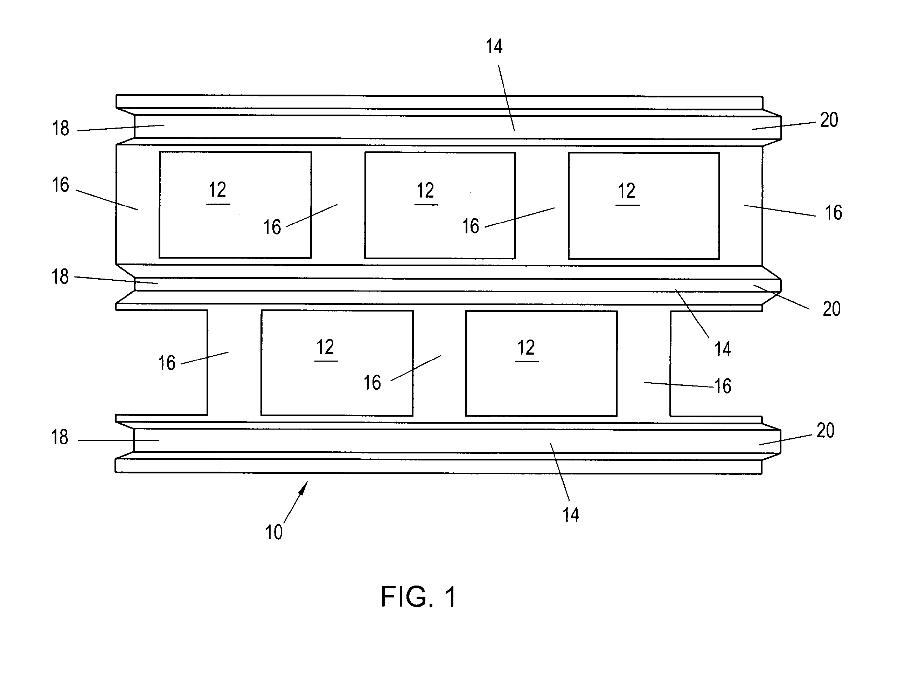

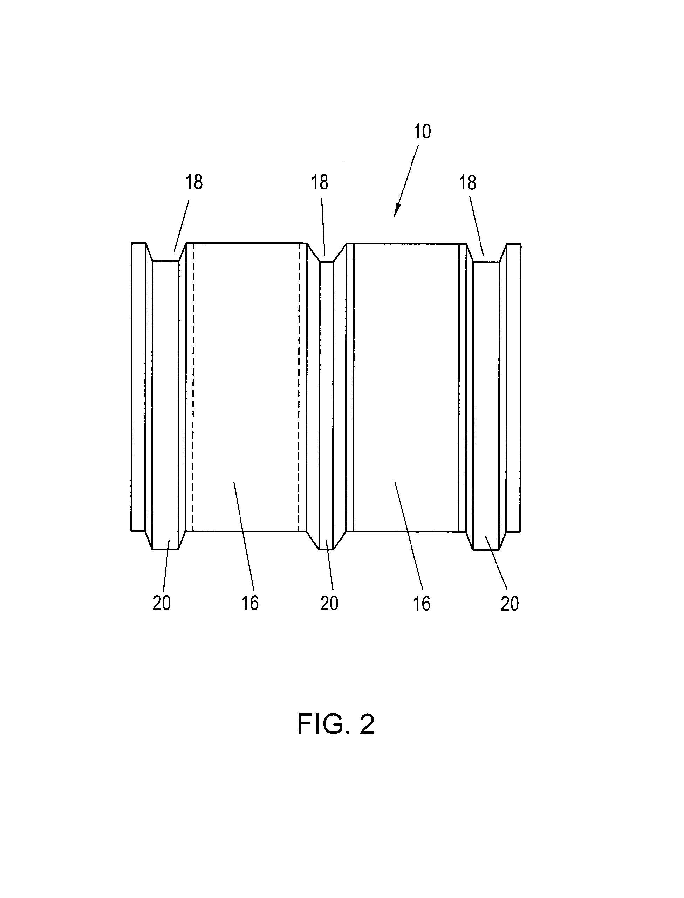

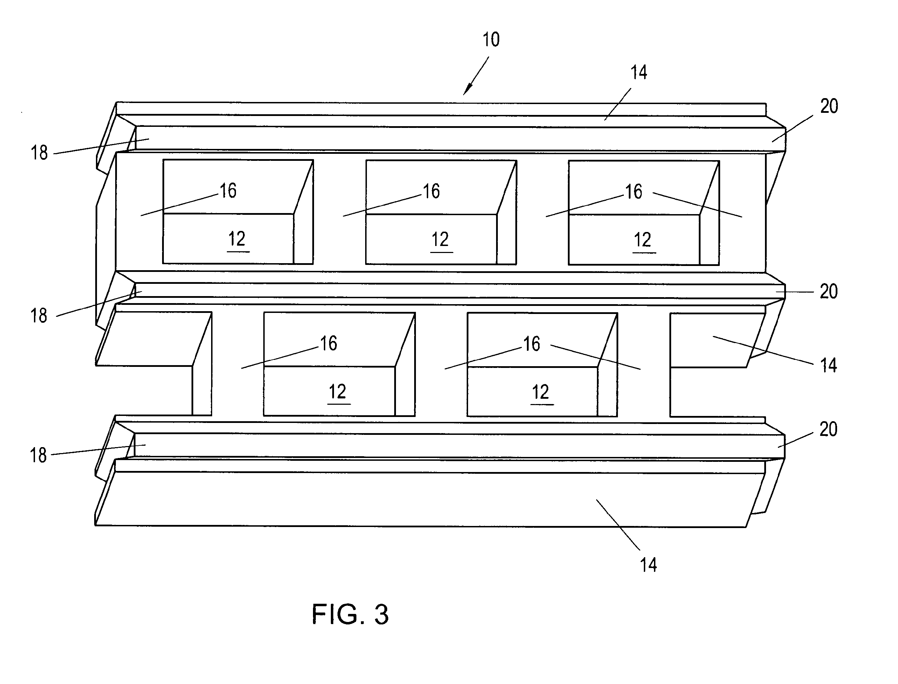

In der Ausführungsform als Hohl-Baustein gemäß Fig. 1 bis 3 besitzt das erfindungsgemäße Bauelement den Vorteil der einfachen Verarbeitbarkeit und der leichten Handhabbarkeit. Entsprechende schalltechnische Werte werden durch Verwendung des erfindungsgemäßen Werkstoffes mit der entsprechenden Rohdichte gewährleistet.

Die innenliegenden Hohlräume 12 des Hohl-Bausteins 10 können zur Verbesserung der Wärmedämmung und/oder Schalldämmung mit üblichen Dämmstoffen ausgefüllt werden. Alternativ ist es möglich, aus erfindungsgemäßen Bausteinen gebildete Wände zur Erhöhung der Festigkeit mit Beton auszufüllen, insbesondere nachdem in die Hohlräume 12 eine Armierung eingebracht worden ist.

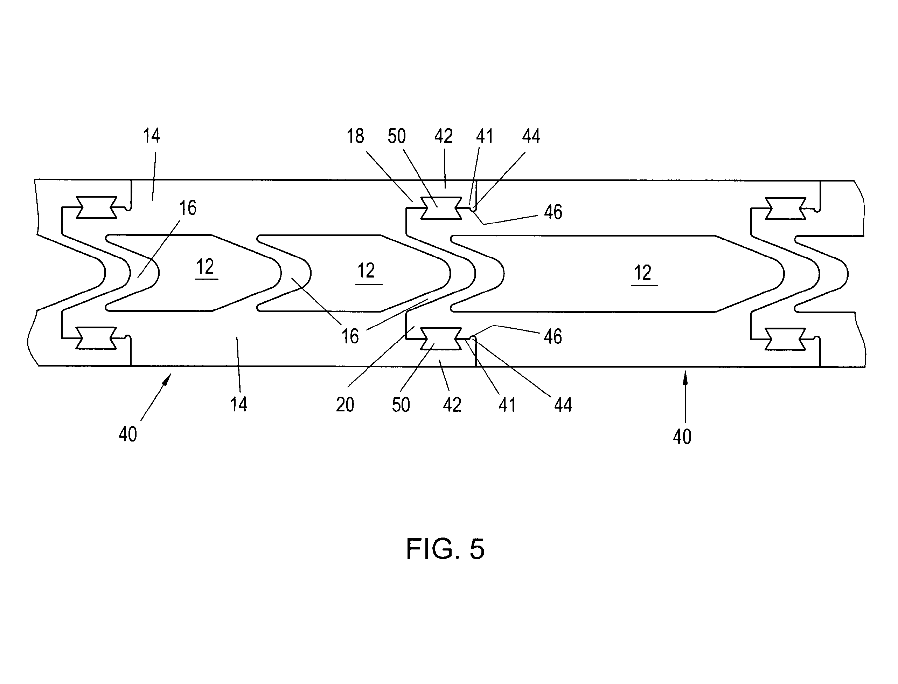

Ein erfindungsgemäßer Baustein 10 in Form eines Hohlblock-Bausteins kann durch seine mit engen Toleranzen ausführbare Nut-Feder-Ausführung durch ein einfaches "Klick"-System (Verrastung, vgl. Fig. 5) zu Wänden u.dgl. zusammengesetzt werden. Es ist dann zur Verbindung der erfindungsgemäßen Bauelemente untereinander keine Mörtel- oder Bindemittellage erforderlich, wie dies bisher bekannt und nötig war.

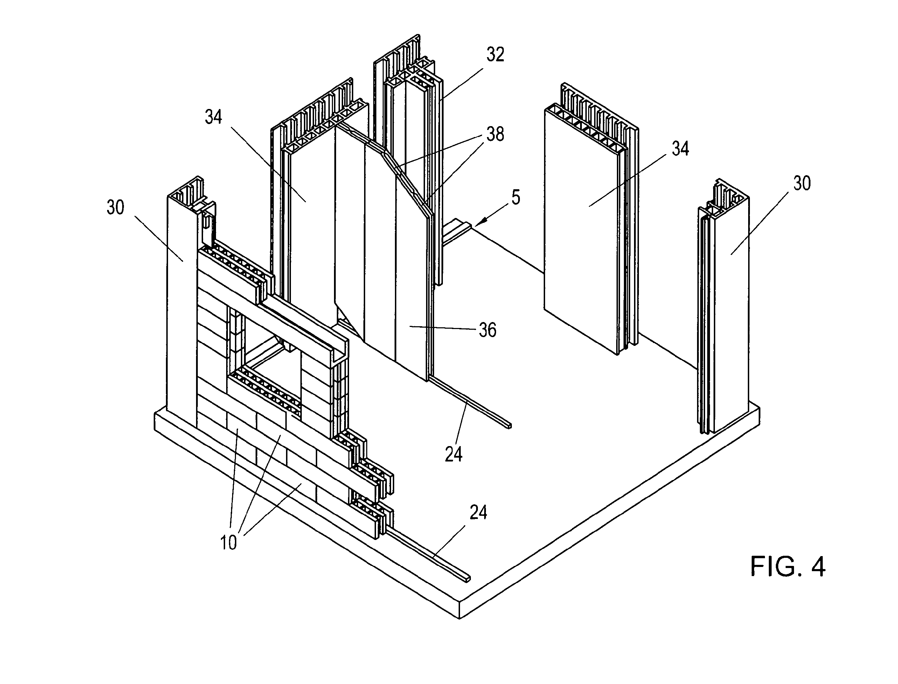

Aus dem erfindungsgemäßen Werkstoff hergestellte Bauelemente (Hohlblock- Bauelement und Innenwandelement und dgl.), können durch Leisten 24, die an Wand, Decke und/oder Fußboden befestigt sind, ausgerichtet und fixiert werden (vgl. Fig. 4). Vorzugsweise haben die Leisten 24 eine trapezförmige Querschnittsform, um das Zentrieren der Bauelemente auf die vorgegebene Lage und Ausrichtung der Wände zu erleichtern.

Einzelheiten dieser Ausführungsform eines erfindungsgemäßen Bauelementes sind in den Fig. 1 bis 3 in verschiedenen Ansichten gezeigt. Ein aus dem erfindungsgemäßen Werkstoff hergestelltes erfindungsgemäßes Bauelement am Beispiel eines Hohl-Bausteines 10 (Systembaustein) kann die Abmessungen: Länge 500mm, Dicke 300mm und Höhe 235 mm haben. Die genannten Abmessungen sind lediglich beispielhaft zu verstehen, da unter Beibehaltung des Bauprinzips des in Fig. 1 bis 3 gezeigten Bausteines 10 auch geschoßhohe Bauelemente hergestellt werden können, wie dies nachstehend noch beschrieben werden wird.

Es ist aus den Fig. 1 bis 3 ersichtlich, dass die drei Wände 14 des erfindungsgemäßen Hohl-Bausteines 10, die miteinander durch Querstege 16 verbunden sind, an ihren Außenrändern mit trapezförmigen Nuten 18 und trapezförmigen Federn 20 ausgerüstet sind. Dabei liegen jeweils eine Nut 18 und eine Feder 20 einander gegenüber. In Fig. 1 ist gezeigt, dass die mittleren Nuten 18 und die mittleren Federn 20 schmaler ausgebildet sein können als die Nuten 18 und Federn 20 an den beiden außenliegenden Wänden 14.

Zusätzlich zu den oben genannten Abmessungen können folgende Größen des Bausteins verwirklicht werden: Länge 250 bis 2800mm, Breite 100 bis 400mm, Höhe 250 bis 3500mm.

Beim Zusammenfügen der erfindungsgemäßen Bauelemente zu größeren Bauteilen, beispielsweise beim Errichten eines Gebäudes, kann zur Erhöhung der Festigkeit an den Federn 20 und/oder in die Nuten 18 Baustoffkleber auf- bzw. eingebracht werden.

Die Hohlräume 12 der erfindungsgemäßen Bauelemente können zur Erhöhung der Dämmung mit schall- und/oder wärmedämmenden Füllungen, die auch schon beim Herstellen des Bauelementes aus dem erfindungsgemäßen Werkstoff eingebracht werden können, ganz oder teilweise ausgefüllt sein.

Wand-Bauelemente (Wandelemente 34, Fig. 4) können in Breiten zwischen 300 und 2100mm, in Dicken von 100 bis 400mm und in Höhen von 20 bis 4000mm hergestellt sein. Die zum Bilden von Wänden bestimmten erfindungsgemäßen Bauelemente können ebenso wie die schmäleren, mit geringerer Tiefe, jedoch größerer Höhe ausgebildeten Wandmodule beim Errichten von Gebäuden mühelos verarbeitet werden.

In Fig. 4 ist ein Beispiel für ein aus den erfindungsgemäßen Bauelementen hergestelltes Bauwerk (teilweise) dargestellt. Es ist ersichtlich, dass die Außenwände aus Hohl-Bausteinen 10, welche die grundsätzliche Konstruktion der anhand der Fig. 1 bis 3 oder Fig. 5 beschriebenen Hohl-Bausteine besitzen können, hergestellt sein können. Es ist auch gezeigt, dass zur Vereinfachung des Versetzens der Bauelemente am Boden Leisten 24 befestigt sind, die von unten her in Vertiefungen zwischen Wänden 14 der Bauelemente eingreifen.

Fig. 4 zeigt auch als Eck-Element 30 und als T-Element 32 ausgebildete Bauelemente. Weiters zeigt Fig. 4, dass für Außenwände auch geschoßhohe Wandelemente 34 verwendet werden können.

Die Eck-Elemente 30, T-Elemente 32 und Wand-Elemente 34 haben Hohlräume und sind bevorzugt im Prinzip ähnlich wie die Bausteine 10 oder 40 der Fig. 1 bis 3 und Fig. 5 ausgebildet. Auch die oberhalb der in Fig. 4 gezeigten Fensteröffnung, oder die oberhalb einer Tür oder einer anderen Öffnung in einer Wand angeordneten U-Elemente können aus dem erfindungsgemäßen Werkstoff hergestellt werden. Diese U-Elemente dienen als Sturz und können je nach ihrer Länge armiert, und gegebenenfalls mit Baustoffkleber oder mit Beton ausgegossen werden. Auch die als Sturz verwendeten U-Elemente können mit Nuten und Federn versehen sein, damit sie mit den mit Nuten und Federn versehenen Bauelementen, so wie oben für diese Bauelemente beschrieben, verbunden werden können.

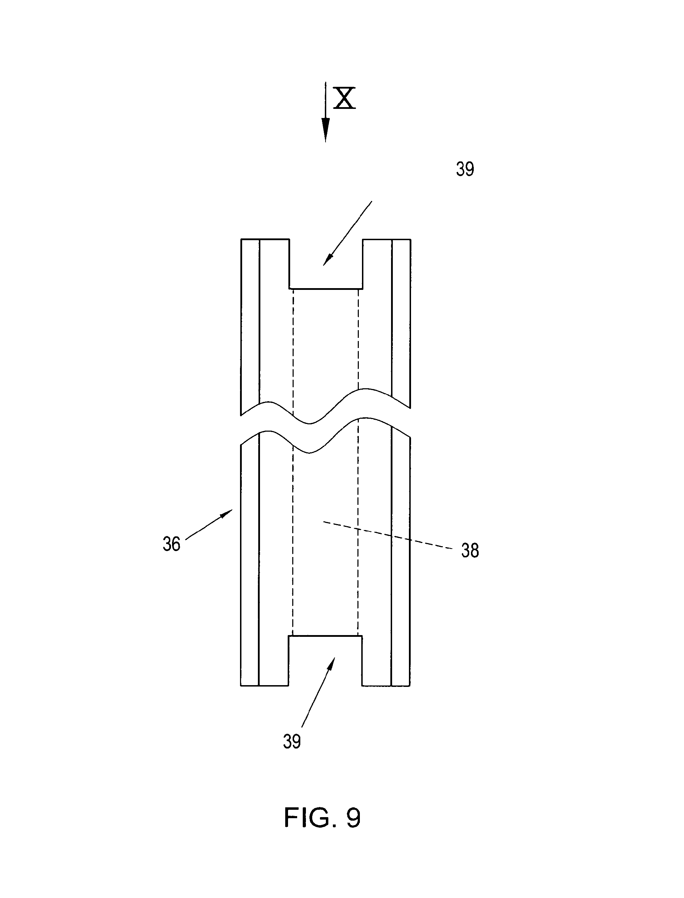

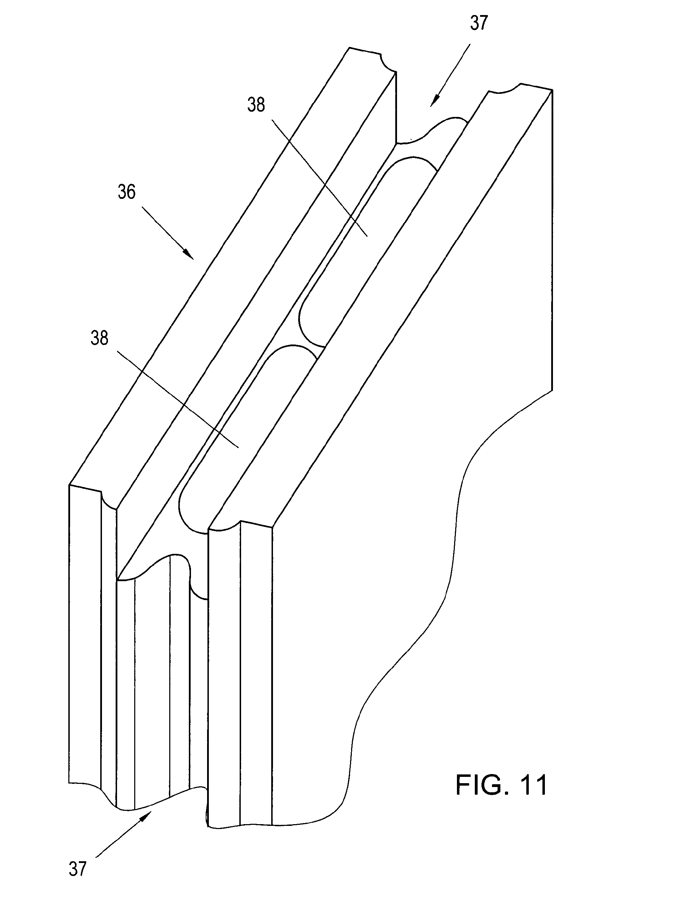

Für Innenwände werden im gezeigten Ausführungsbeispiel Innen-Wandelemente 36 verwendet, die gegebenenfalls mit Dämmstoff gefüllte Hohlräume 38 aufweisen, die über die Länge der Innen-Wandelemente 36 durchgehend sein können. Auch die Innen-Wandelemente 36 können an ihren Rändern mit Nut 18- Feder 20 - Verbindungen ausgestattet sein, wie dies in Fig. 1 bis 3 4 und 5 angedeutet ist. Innen-Wandelemente 36 können folgende Abmessungen haben: Höhe bis 4000mm, Breite 300 bis 2100mm und Dicke 100 bis 150mm. Weitere Einzelheiten von Innenwandelementen 36 werden weiter unten an Hand der Fig. 9 bis 11 beschrieben.

In Fig. 5 ist eine andere Ausführungsform für aus dem erfindungsgemäßen Werkstoff hergestellte Hohl-Bauelemente gezeigt. Diese Bauelemente können als Baublock oder als wandbildendes Modul ausgebildet und dimensioniert sein.

In dem in Fig. 5 gezeigten Ausführungsbeispiel besteht jedes Bauelement 40 aus zwei Außenwänden 14, die miteinander durch zwei oder mehrere gewinkelte Verbindungsstege 16 verbunden sind. An den Rändern sind Nut 18 - Feder 20 - Verbindungen, bevorzugt mit trapezförmigem Querschnitt (vgl. Fig. 1 bis 3) vorgesehen. Dabei ist an den Außenrändern 41 der die Nuten 18 begrenzenden Wandteile 42 jeweils eine Rastrippe 44 und an der Wurzel der Federn 20 eine entsprechende nutförmige Rastausnehmung 46 vorgesehen, sodass ein Verbinden der Bauelemente 40 durch Verrasten nach Art eines "Klick"-Systems möglich ist.

Zusätzlich ist es zur Sicherung der Verbindung möglich, in entsprechend geformte, z.B. hinterschnittene Nuten 50 an den die Nuten 18 an den Bauelementen 40 begrenzenden Wänden 42 und den Außenseiten der Federn 20 vorzusehen, welche nach dem Zusammensetzen der Bauelemente 40 mit einem Schaumkleber (Montageschaum) ausgefüllt werden können.

Je nach der Breite der erfindungsgemäßen Bauelemente gemäß Fig. 5 sind Querstege 16 lediglich an den lotrechten Rändern oder Querstege 16 auch in der Mitte vorgesehen.

Wenn in die Hohlräume 14 der erfindungsgemäßen Bauelemente, insbesondere die gemäß Fig. 5, eine Isolierung eingebracht wird, kann vorgesehen sein, dass diese Isolierung schon während des Herstellens der Bauelemente aus dem erfindungsgemäßen Werkstoff eingebracht wird, so dass beim endgültigen Aushärten des Werkstoffes, aus dem die Bauelemente hergestellt sind, eine gute Verbindung zwischen Isolierung und dem Werkstoff, insbesondere der inneren Wand, erreicht wird.

Die aus den erfindungsgemäßen Wandelementen, insbesondere jenen der Fig. 5, hergestellten Wände können mit Folien oder Netzen überzogen werden, sodass die Fugen zwischen aneinandergrenzenden Bauelementen verdeckt sind, und ein nachträgliches Verputzen oder Ausspachteln der Spalte nicht mehr erforderlich ist.

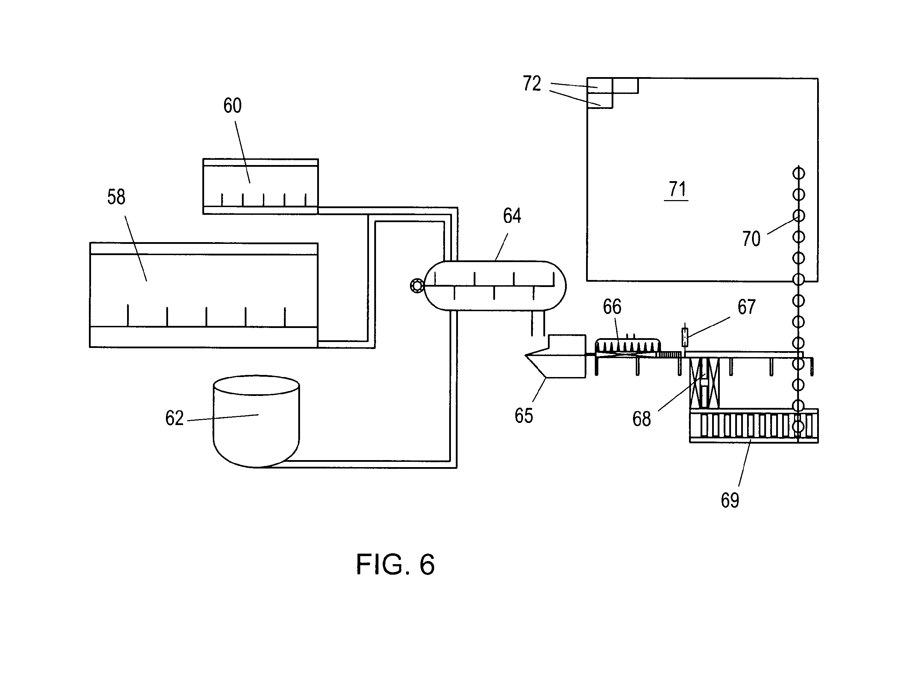

Verfahren und Anlagen zum Herstellen von erfindungsgemäßen Bauelementen aus dem erfindungsgemäßen Werkstoff werden nachstehend unter Bezugnahme auf die Fig. 6, 7 und 8 erläutert.

Bei der in Fig. 6 gezeigten Anlage ist ein Silo 58 für Hanfschäben vorgesehen. Des Weiteren sind ein Silo 60 für Kauster und ein weiterer Silo 62 (Tank) für eine wässerige Magnesiumsulfatlösung vorgesehen. Aus den drei genannten Vorratsbehältern 58, 60, 62 werden Hanfschäben, Kauster und Magnesiumsulfatlösung in den vorgegebenen Mengen zu einer Strangpumpe 64 gefördert und in dieser während des Förderns gemischt. Die Strangpumpe 64 beaufschlagt eine Form 65, in der das Gemenge aus Hanfschäben und dem Bindemittel (Kauster + Magnesiumsulfat) zu einem Strang mit der gewünschten Form verformt wird, wobei durch eine der Form 65 zugeordnete Mikrowellenheizung dafür gesorgt wird, dass der Werkstoff in kürzester Zeit auf eine Temperatur von 100 bis 150°C erwärmt wird und dadurch aushärtet. Durch die Abstimmung der Vorschubgeschwindigkeit ist die Aushärtung des Werkstoffes individuell einstellbar.

Wenn der Werkstoff aus der Form 65 austritt, ist er bereits ausgehärtet und kann mit einer Profilfräse 66 bearbeitet werden, um die endgültige Formgebung (Nuten und Federn an den Rändern) zu erhalten. Es werden dann mit einer Säge 67 die einzelnen Stücke vom Strang abgelängt und auf eine Fördereinrichtung 68, 69 aufgegeben. Von dieser Fördereinrichtung 68, 69 werden die einzelnen Bauelemente mit einer Vakuumhebevorrichtung 70 zu einem Lagerplatz 71 gebracht und mit einer Stapeleinrichtung 72 abgestapelt.

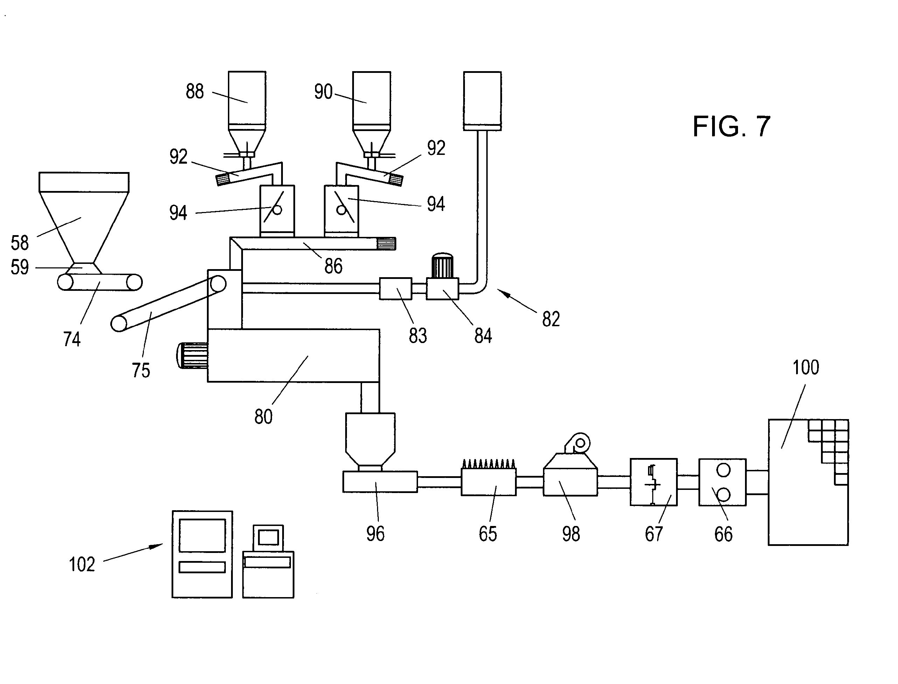

Die Anlage von Fig. 7 ist wie folgt aufgebaut und wird wie nachstehend beschrieben betrieben:

Aus einem Silo 58 werden die Zellulose-Grundstoffe (Hackschnitzel, Holzwolle, Hanfschäben u.dgl.) des Werkstoffs über eine Dosierwaage 59 am unteren Ende des Silo 58 über Förderbänder 74, 75 dem Aufgabeende eines Einwellendurchlaufmischers (Chargenmischer) 80 aufgegeben. Dem Chargenmischer 80 wird auch die erforderliche Menge Flüssigkeit (Wasser) über eine Flüssigkeitsregelstrecke 82 mit Durchflussmesser 83 mit Magnetregelventil und Pumpe 84 aufgegeben. Weiters wird dem Aufgabeende des Chargenmischers 80 über eine Sammelförderschnecke 86 Bindemittel aufgegeben. Die Sammelförderschnekke 86 wird im gezeigten Ausführungsbeispiel aus zwei Silos 88, 90 mit Flachschiebern über Dosierschnecken 92 und Schüttstrommesseinrichtungen 94 beschickt, wobei das Bindemittel im Ausführungsbeispiel aus Kauster und Magnesiumsulfat besteht.

Das Abgabeende des Einwellendurchlaufmischers 80 ist mit einer Förderpumpe 96 verbunden, die das Gemenge einer Form 65 aufgibt. Die Form 65 erlaubt es, die gewünschten Bauelemente im Durchlaufverfahren nach Art einer Strangpresse herzustellen. Die Form 65 ist mit einer Mikrowellenheizung versehen. Durch die Verwendung von Formen (insbesondere solchen aus Kunststoff) mit Mikrowellenheizung ist es möglich, Endlosbauelemente von beispielsweise 10 bis 40cm Stärke und 10 bis 180cm Breite 99 auch mit Isolierstoff-gefüllten Hohlräumen zu erzeugen.

Wenn die Form 65 austauschbar ist, können auch Bauplatten beispielsweise mit 2 bis 15cm Stärke endlos hergestellt werden.

In der Form 65 aus Kunststoff mit Mikrowellenheizung wird der Werkstoff nach kurzer Zeit auf eine Temperatur zwischen 100 und 150°C aufgeheizt und dadurch rasch ausgehärtet.

Durch die Möglichkeit, die Vorschubgeschwindigkeit auf die Aushärtezeit abzustimmen, ist die Aushärtung so einstellbar, dass die Bauelemente beim Verlassen der Form 65 ausgehärtet sind. Die noch als endloser Strang aus der Form austretenden Bauelemente werden mit Hilfe eines Trockengebläses 98 getrocknet und dann mit einer Säge 67 auf die jeweils gewünschte Länge zugeschnitten. Im Anschluss daran können sie noch mit Fräsen 66 bearbeitet werden, um beispielsweise an den Rändern von Bauelementen Nuten und Federn zu erzeugen.

Die fertigen Bauelemente werden in einer Palettieranlage 100 auf Paletten gestapelt. In Fig. 7 ist noch die Steuerung 102 der Anlage schematisch angedeutet.

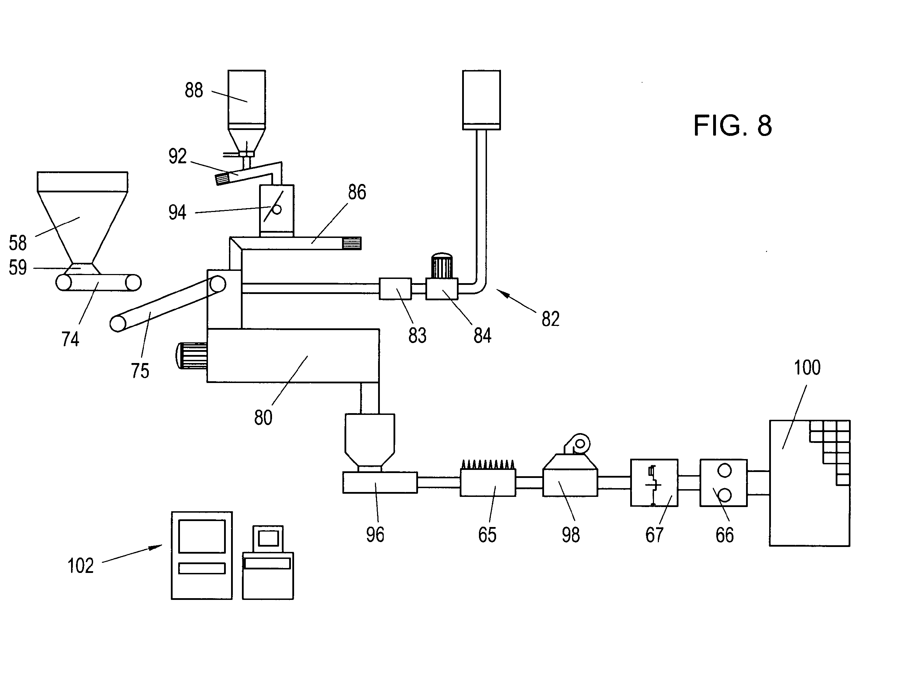

Die in Fig. 8 gezeigt Anlage entspricht der Anlage wie sie anhand von Fig. 7 beschrieben worden ist, mit dem Unterschied, dass ein gesonderter Silo 90 für Magnesiumsulfat entfällt, da über die Dosiereinrichtung 82 eine Lösung von Magnesiumsulfat in Wasser dosiert dem Aufgabeende des Chargenmischers 80 aufgegeben wird. Im Übrigen entspricht die Anlage von Fig. 8 der von Fig. 7.

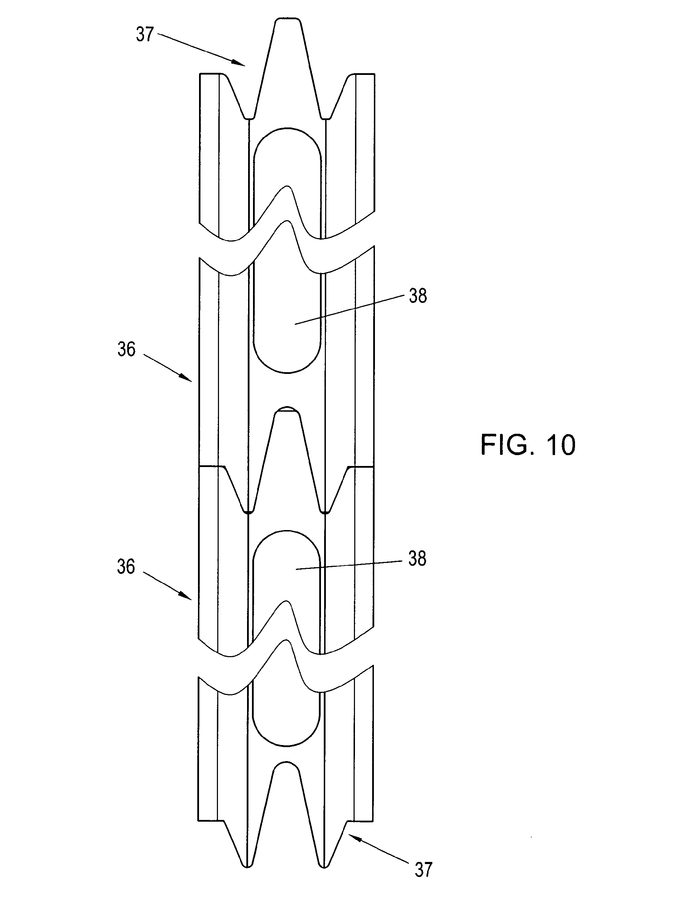

Das in den Fig. 9 bis 11 gezeigte Ausführungsbeispiel eines Innenwandelementes 36 besitzt zwei gegebenenfalls mit Isolierstoff gefüllte, über die Höhe der Innenwandelemente 36 durchgehende Hohlräume 38. Die lotrechten Ränder 37 der Innenwandelemente 36 sind gegengleich profiliert, so dass sie wie in Fig. 10 gezeigt ineinandergreifen können. Die oberen und unteren Ränder der Innenwandelemente 36 sind mit Nuten 39 ausgebildet.

Zusammenfassend kann ein Ausführungsbeispiel der Erfindung wie folgt dargestellt werden:

Ein Werkstoff für das Herstellen von Bauelementen wie Baublöcken oder Wandelementen enthält als Grundstoff wenigstens ein zellulosehaltiges Material insbesondere Hackschnitzel oder Hanfschäben und als anorganisches Bindemittel ein Gemenge aus gebrannter Magnesia (Kauster) und Magnesiumsulfat. Beim Herstellen von Bauelementen aus diesem Werkstoff wird ein Verfahren angewendet, bei dem die Bestandteile des Werkstoffes gemischt und mit Wasser angemacht zu einer Strangpressform befördert werden, wobei der Werkstoff beim formgebenden Arbeitsschritt mit Hilfe von Mikrowellen erhitzt wird, um den Abbindevorgang zu beschleunigen. Aus dem Strang aus gehärtetem Werkstoff können durch Sägen und/oder Fräsen Bauelemente hergestellt werden.

## Patentansprüche

1. Werkstoff für Bauelemente **gekennzeichnet durch** wenigstens einen Grundstoff in Form eines zellulosehaltigen Materials und **durch** wenigstens ein Bindemittel.

2. Werkstoff nach Anspruch 1, **dadurch gekennzeichnet, dass** der wenigstens eine Grundstoff Holz ist.

3. Werkstoff nach Anspruch 2, **dadurch gekennzeichnet, dass** der wenigstens eine Grundstoff Hackschnitzel sind.

4. Werkstoff nach Anspruch 1, **dadurch gekennzeichnet, dass** der wenigstens eine Grundstoff Hanfschäben sind.

5. Werkstoff nach Anspruch 1, **dadurch gekennzeichnet, dass** der wenigstens eine Grundstoff Este ist.

6. Werkstoff nach Anspruch 5, **dadurch gekennzeichnet, dass** Este das Abfallprodukt bei der Papierherstellung ist.

7. Werkstoff nach Anspruch 2, **dadurch gekennzeichnet, dass** der wenigstens eine Grundstoff Abfallstoffe der holzverarbeitenden Industrie, wie Sägespäne und Hobelscharten, sind.

8. Werkstoff nach einem der Ansprüche 1 bis 7, **dadurch gekennzeichnet, dass** der wenigstens eine Grundstoff organische Fasern wie Hanffasern, Flachsfasern und Jutefasern enthält.

9. Werkstoff nach Anspruch 1, **dadurch gekennzeichnet, dass** der wenigstens eine Grundstoff Schilf, Stroh und Gräser ist/sind.

10. Werkstoff nach einem der Ansprüche 1 bis 9, **dadurch gekennzeichnet, dass** der Werkstoff Fasermaterial in Form von natürlichen Fasern wie Schafwolle oder künstlichen Fasern wie Polypropylen oder Polyethylenfasern enthält.

11. Werkstoff nach einem der Ansprüche 1 bis 10, **dadurch gekennzeichnet, dass** der Werkstoff als zellulosehaltigen Grundstoff wenigstens zwei Materialien ausgewählt aus der Gruppe bestehend aus Holzhackschnitzel, Hanfschäben und Este enthält.

12. Werkstoff nach einem der Ansprüche 1 bis 11, **dadurch gekennzeichnet, dass** das anorganische Bindemittel wenigstens ein Bindemittel ausgewählt aus der Gruppe bestehend aus Lehm, Ton, Gips, Zement und Gemisch aus gebrannter Magnesia und Magnesiumfulfat ist.

13. Werkstoff nach Anspruch 12, **dadurch gekennzeichnet, dass** das anorganische Bindemittel ein Gemenge aus gebrannter Magnesia (Kauster) und Magnesiumsulfat ist.

14. Werkstoff nach einem der Ansprüche 1 bis 13, **dadurch gekennzeichnet, dass** der Werkstoff als zellulosehaltigen Grundstoff Hanfschäben und als anorganisches Bindemittel ein Gemenge aus gebrannter Magnesia und Magnesiumsulfat enthält.

15. Werkstoff nach einem der Ansprüche 1 bis 13, **dadurch gekennzeichnet, dass** der Werkstoff als zellulosehaltigen Grundstoff ein Gemenge aus Hackschnitzel und Hanfschäben und als anorganisches Bindemittel ein Gemenge aus gebrannter Magnesia und Magnesiumsulfat enthält.

16. Verfahren zum Herstellen von Bauelementen in Form von Baublökken oder Bauplatten aus einem Werkstoff nach einem der Ansprüche 1 bis 15, **dadurch gekennzeichnet, dass** der wenigstens ein Grundstoff mit dem wenigstens einen anorganischen Bindemittel vermengt wird, dass das Gemenge mit Wasser versetzt wird, dass das Gemenge aus wenigstens einem Grundstoff anorganische Bindemittel und Wasser vermischt und im Strangpressverfahren zu einem Strang mit wenigstens einem Hohlraum geformt wird, dass der geformte Strang durch Energiezufuhr zum Aushärten erwärmt wird, und dass der Strang aus ausgehärtetem Werkstoff durch formgebende Bearbeitung zu dem Bauelement zerteilt und/oder bearbeitet wird.

17. Verfahren nach Anspruch 16, **dadurch gekennzeichnet, dass** die Energiezufuhr durch Mikrowellenstrahlung erfolgt.

18. Verfahren nach Anspruch 16 oder 17, **dadurch gekennzeichnet, dass** die Formgebung in einer Kunststoffform erfolgt und dass die Energiezufuhr durch Mikrowellen im Bereich der Form erfolgt.

19. Verfahren nach Anspruch 16 bis 18, **dadurch gekennzeichnet, dass** der Strang durch Fräsen formgebend bearbeitet wird.

20. Verfahren nach Anspruch 16 bis 19, **dadurch gekennzeichnet, dass** der Strang durch Sägen in einzelne Bauelemente unterteilt wird.

21. Verfahren nach einem der Ansprüche 16 bis 20, dass ein Strang mit wenigstens einem längslaufenden Hohlraum geformt wird, und dass während oder unmittelbar nach der Formgebung in den Hohlraum ein isolierender Werkstoff eingebracht wird.

22. Bauelement bestehend aus dem Werkstoff gemäß einem der Ansprüche 1 bis 15, **dadurch gekennzeichnet, dass** es an wenigstens zwei aneinander gegenüberliegenden Rändern mit komplementär geformten Nut- und Feder ausgebildet ist und dass in einem Bauelement wenigstens ein Hohlraum vorgesehen ist.

23. Bauelement nach Anspruch 22, **dadurch gekennzeichnet, dass** das Bauelement in Form eines Baublocks ausgebildet ist und wenigstens zwei durch wenigstens zwei quer ausgerichtete Stege miteinander verbundenen Wandteile aufweist.

24. Bauelement nach Anspruch 22 oder 23, dass die Hohlräume, insbesondere Hohlräume zwischen den Wandteilen und den diese verbindenden Stegen, mit einem Isolier- bzw. Dämmmaterial ausgefüllt sind.

25. Bauelement nach Anspruch 22 bis 24, **dadurch gekennzeichnet, dass** im Bereich der Nuten und Federn Rastausnehmungen und Rastvorsprünge ausgebildet sind.

26. Bauelement nach Anspruch 23 bis 25, **dadurch gekennzeichnet dass** die Stege gewinkelt ausgebildet sind.

27. Bauelement nach einem der Ansprüche 22 bis 26, **dadurch gekennzeichnet, dass** die Nuten und Federn eine trapezförmige Querschnittsform besitzen.

28. Anlage zum Ausführen des Verfahrens nach einem der Ansprüche 16 bis 21 zum Herstellen von Bauleementen nach einem der Ansprüche 21 bis 27 aus einem Werkstoff nach einem der Ansprüche 1 bis 15 **gekennzeichnet durch** eine mit dem Werkstoff aus dem wenigstens einen zellulosehaltigen Grundstoff und dem anorganischen Bindemittel beaufschlagte strangpressenartige Form und **durch** eine der Form zugeordnete Heizung zum Erwärmen des Werkstoffes zur Beschleunigung des Aushärtens.

29. Anlage nach Anspruch 28, **dadurch gekennzeichnet, dass** die Heizung eine Mikrowellenheizung ist.

30. Anlage nach Anspruch 29, **dadurch gekennzeichnet, dass** die Form wenigstens in dem Teil, in welchem die Heizung vorgesehen ist, aus Kunststoff besteht.
